# EUROPEAN PATENT SPECIFICATION

(11) **EP 4 605 798 B1**
(45) Date of publication and mention of the grant of the patent: **25.02.2026**
(21) Application number: 23814225.1
(22) Date of filing: 02.12.2023
(51) Int. Cl.: H04L 9/40, H04L 67/025, H04W 12/06, G05B 19/042

(54) **CONTROL DEVICE FOR AT LEAST ONE ELECTRIC POWER SYSTEM COMPONENT, MOBILE DEVICE, AND METHOD OF CONTROLLING OPERATION OF A CONTROL DEVICE**
STEUERUNGSVORRICHTUNG FÜR MINDESTENS EINE STROMVERSORGUNGSSYSTEMKOMPONENTE, MOBILE VORRICHTUNG UND VERFAHREN ZUR STEUERUNG DES BETRIEBS EINER STEUERUNGSVORRICHTUNG
DISPOSITIF DE COMMANDE POUR AU MOINS UN COMPOSANT DE SYSTÈME D'ALIMENTATION ÉLECTRIQUE, DISPOSITIF MOBILE ET PROCÉDÉ DE COMMANDE DU FONCTIONNEMENT D'UN DISPOSITIF DE COMMANDE

(30) Priority: 05.12.2022 EP 22211372
(43) Date of publication of application: 27.08.2025
(73) Proprietor: Hitachi Energy Ltd, 8050 Zürich (CH)
(72) Inventor: DECK, Bernhard, 79809 Weilheim (DE); DAN, Andrei-Marian, 8112 Otelfingen (CH)
(74) Representative: Meier, Florian
(86) International application number: PCT/EP2023/084024
(87) International publication number: WO 2024/121011

(56) References cited:
- US-A1- 2013 024 542
- US-A1- 2022 129 510

## Description

### TECHNICAL FIELD

Embodiments of the invention relate to a control device for at least one electric power system component and devices, systems, and methods associated with such a control device. Embodiments of the invention relate in particular to a control device for at least one electric power system component having different control modes, a mobile device configured to interact with such a control device, and a method of controlling operation of such a control device.

### BACKGROUND

Electric power systems are important infrastructure components. Electric power systems, such as power generation, transmission, and/or a distribution systems, comprise electric power system components. Switchgear, such as switches or circuit breakers, is exemplary for electric power system components in a primary system.

Modern systems employ control devices to operate the electric power system components. Intelligent electronic devices (IEDs) are an implementation of such control devices.

Control devices may have different control modes. The provision of such different control modes is useful for safeguarding the safety of engineers that may have to be deployed to perform work, such as maintenance work, locally at the control device. The different control modes may prevent a control device from being controlled remotely while the control device is set to a local control mode by an engineer at the control device.

Changing the control mode can be effected by a mechanism which requires physical interaction of the engineer with the control device. The use of a physical key that can be engaged with the control device or the entering of a code by pushing user interface elements of the control device are examples of such techniques which require physical interaction of the engineer that the control device.

Several shortcomings are associated with a mechanism that requires physical interaction of the engineer with a control device to change their control mode. The need for physical interaction may expose the engineer to a danger in case there is a fault condition in the control device or otherwise in an electric power system substation in which the control device is arranged. The need for physical interaction also makes it more cumbersome to return the control device to a remote control mode if the engineer has left the site at which the control device is arranged while inadvertently leaving it in a local control mode.

US 2013/0024542 A1 discloses techniques for operating a mobile device to control industrial automation equipment. A mobile device application comprises program instructions which, when executed by the mobile device, direct the mobile device to obtain industrial device information corresponding to an industrial device within an automation environment, and display the industrial device information on a display of the mobile device.

US 2022/0129510 A1 discloses techniques in which a webpage includes functionality for monitoring and controlling a pump or an Internet of Things (IoT) device associated with the pump equipment. A request for the webpage is received in response to a scan of bar code affixed to the pump equipment or to the loT device.

### SUMMARY

It is an object of the invention to provide devices, systems and methods that address one or more of the above-described shortcomings. It is also an optional object of the invention to provide a control device and a mobile device configured to interact with the control device, which provide enhanced safety for an engineer. It is also an optional object of the invention to provide a control device and a mobile device configured to interact with the control device, which facilitate setting the control device to a remote control mode even when the engineer is no longer present on site.

According to the invention, a control device, a mobile device, and a method as recited in the independent claims are provided. The dependent claims define preferred embodiments.

According to an aspect of the invention, there is provided a control device for at least one electric power system component. The control device comprises at least one control circuit, configured to be coupled to a communication interface and the at least one electric power system component. The at least one control circuit is further configured to receive data from the communication interface; set the control device to a local control mode based on the received data if a user of a mobile device is at a first location local to the control device; and set the control device to a remote control mode in response to a request of the user of the mobile device from a second location remote to the control device.

Such a control device provides various effects. The at least one control circuit is configured to set the control device to the local control mode based on the received data from the communication interface, without necessarily requiring physical interaction of the user of the mobile device with the control device. The at least one control circuit is configured to set the control device to the remote control mode even when the user of the mobile device is at the second location remote to the control device. The need for physical presence at the control device for setting the control device to the remote control mode is thereby relaxed, provided that the request originates from the user of the mobile device.

The communication interface may comprise a wireless interface.

This allows the control device to interact with the user via the mobile device and without requiring physical interaction with the control device.

The control device may be configured to receive the data via the wireless interface.

This allows a change in a control mode to be triggered by the user of the mobile device over a wireless connection and without requiring physical interaction with the control device.

The at least one control circuit may be configured to authenticate, based on the received data, the user of the mobile device for setting the control device to the local control mode.

The authentication further enhances safety. Information on an identity of the user may be acquired in the authentication and stored for subsequent use, e.g., to ensure that the control device is set by the at least one control circuit to the remote control mode based on the request of the very same user of the mobile device who initiated setting the control device to the local control mode.

The received data may comprise an authentication key. The at least one control circuit may be configured authenticate, based on the received data, the user of the mobile device for setting the control device to the local control mode.

The authentication further enhances safety.

The at least one control circuit may be configured to perform another authentication of the user, based on user information stored on the control device, and to set the control device to the remote control mode based on the another authentication.

The another authentication further enhances safety. The control device may be configured to perform the another authentication to ensure that the control device is set by the at least one control circuit to the remote control mode by the very same user of the mobile device who initiated setting the control device to the local control mode.

The control device may be configured to set the control device to the local control mode after a successful biometric authentication of the user. The at least one control circuit may be configured to determine, based on the data, that the biometric authentication of the user has been successfully performed. The control device may be configured to interface, via the at least one communication interface, with the mobile device for the biometric authentication. The biometric authentication may comprise a face recognition, fingerprint recognition, and/or iris signature recognition.

Thereby, safety is further enhanced. Biometric authentication techniques may be employed to check that the user of the mobile device is authenticated to trigger a change in control mode and to ascertain an identity of the user of the mobile device.

The control device may be configured to generate and output a code comprising at least one of parameters of a communication channel via which the data are received and a unique control device identifier.

Thereby, the control device may provide information required for generation of the data and/or the request to the mobile device.

The code may comprise both parameters of a communication channel via which the data are received and a unique control device identifier.

Thereby, the control device can provide information required for generation of the data and the request to the mobile device.

The code may comprise a wireless secure key and identifier for the control device. The code may be configured to enable the mobile device and control device to establish a communication channel via which the control device receives the data. The communication channel may be a temporary point-to-point wireless connection between the mobile device and the control device.

Thereby, the control device can provide information required for generation of the data and the request to the mobile device.

The code may comprise a visual code.

Thereby, the control device may provide information required for generation of the data and/or the request to the mobile device while ensuring that the mobile device must be within viewing distance.

The code may comprise a graphical code. The graphical code may comprise a two-dimensional graphical code and/or a barcode. The graphical code may comprise a two-dimensional barcode.

Thereby, the control device may provide information required for generation of the data and/or the request to the mobile device while ensuring that the mobile device must be within viewing distance.

The control device may comprise an output interface configured to output the code. The output interface may comprise a display. The at least one control circuit may be configured to control the output interface to output the code.

Thereby, the control device may provide information required for generation of the data and/or the request to the mobile device while ensuring that the mobile device must be within viewing distance.

The control device may be configured to store information included in the code in association with an identifier for the user in a non-volatile control device storage and/or remotely in a supervisory system. The stored information may comprise an authentication key included in the data and a code generated by the control device to enable the control device and the mobile device to establish a communication channel.

Thereby, the control device can ensure that the request to set the control device to the remote control mode originates from the user of the mobile device who used the mobile device when the control device was set to the local control mode.

The at least one control circuit may be configured to set the control device to the remote control mode in response to the request if a time condition is fulfilled.

Provision of such a time condition which is checked by the at least one control circuit before setting the control device to the remote control mode may further enhance safety. The risk of inadvertent changes in control modes is reduced.

The at least one control circuit may be configured to set the control device to the remote control mode in response to the request if the request is received within a time period after the control device has been set to the local control mode. The at least one control circuit may be configured to monitor a time that has elapsed since the control device has been set to the local control mode and to determine whether the request is received before the time reaches a timeout value.

Provision of such a time-based criterion which is checked by the at least one control circuit before setting the control device to the remote control mode may further enhance safety. The risk of inadvertent changes in control modes is reduced.

The at least one control circuit may be configured to adjust the timeout value.

Thereby, the control device can be adapted to different deployment scenarios and use cases.

The at least one control circuit may be configured such that the timeout value may be adjustable during configuration and/or commissioning of the control device. Alternatively or additionally, the at least one control circuit may be configured to adjust the timeout value in response to a command.

Thereby, the configuration of the control device may be adjusted as appropriate for the deployment scenario of the control device, e.g., depending on the configuration of an electric power system substation in which the control device is deployed.

The at least one control circuit may further be configured to set the control device to the remote control mode based on another request from the user of the mobile device if the user of the mobile device is at the first location local to the control device.

This allows the control device to be set to the remote control mode either by the request that may be received while the user of the mobile device is at the second location remote to the control device or by the another request that may be received while the user of the mobile device is at the first location local to the control device. Versatility is enhanced by providing various options for setting the control device to the remote control mode.

The control device may be configured to receive the data via a wireless communication channel.

Thereby, interaction of the user of the mobile device with the control device is facilitated. The need for physical interaction of the user with the control device is reduced.

The control device may be configured to receive the data via a wireless point-to-point communication channel.

Thereby, interaction of the user of the mobile device with the control device is facilitated. The need for physical interaction of the user with the control device is reduced.

The control device may be configured to receive the request via a supervisory system, such as a Supervisory Control and Data Acquisition (SCADA) system and/or a fleet management (FLM) system, at the at least one communication interface.

Thereby, safety is enhanced further. The control device can receive the request via a communication interface of the at least one communication interface at which it receives commands from the supervisory system, such as a SCADA and/or FLM system.

The communication interface may comprise a first communication interface and a second communication interface. The control device may be configured to receive the data at the first communication interface and the request at the second communication interface.

Thereby, different interface implementations may be provided for setting the control device to local control mode and to remote control mode.

The first communication interface may comprise or may be a first wireless interface. The first wireless communication may be configured for receiving the data via a wireless point-to-point link.

Thereby, safety is enhanced further. Parameters for the wireless point-to-point link may be provided locally by the control device to determine that the user of the mobile device is at the first location local to the control device when setting the control device to the local control mode.

The second communication interface may comprise or may be a second wired or wireless interface. The second communication interface may be configured for communication in accordance with IEC 61850. The second communication interface may be compatible with IEC 61850-7 and/or IEC TR 61850-90.

Thereby, setting the control device to the remote control mode may be initiated via communication techniques that provide the reliability and responsiveness required for electric power systems.

The at least one control circuit may be configured to operate the at least one electric power system component.

Thereby, the control device may be configured to perform control functions in an electric power system, e.g., in a substation automation (SA) system or other industrial automation and control system (IACS).

The at least one control circuit may be configured such that, when the control device is in the local control mode, the at least one control circuit is configured to operate the at least one electric power system component locally (e.g., responsive to an input performed at the control device or received from the mobile device at the at least one communication interface while the user of the mobile device is at the first location).

Thereby, the at least one electric power system component may be operated by an engineer present on-site at the installation in which the control device is provided. This ensures that the engineer can have visual control over what is happening in the primary system and further enhances safety.

The at least one control circuit is configured such that, when the control device is in the local control mode, the at least one control circuit is configured such that it reduces or eliminates the possibility of the at least one electric power system component being operated remotely (e.g., responsive to a command received via a supervisory system).

Thereby, safety is enhanced further.

The at least one control circuit is configured such that, when the control device is in the remote control mode, the at least one control circuit is configured to operate the at least one electric power system component remotely (e.g., responsive to a command received from a supervisory system).

Thereby, the at least one electric power system component can be operated via a supervisory system when in remote control mode.

The at least one control circuit may be configured such that, when the control device is in the remote control mode, the at least one control circuit is configured such that it reduces or eliminates the possibility of the at least one electric power system component being operated locally (e.g., by a command received from the mobile device via a wireless point-to-point connection).

Thereby, the at least one electric power system component may be operated via a supervisory system when in remote control mode.

The at least one control circuit may be configured to trip switchgear.

Thereby, the control device may be implemented as a control device for switchgear, such as a circuit breaker (CB), switch, or other switchgear of an electric power system generation, distribution, and/or transmission system.

The at least one control circuit may be configured to generate an operation signal or operation command for operating the at least one electric power system component.

Thereby, the control device may be implemented as a component of a SA system or other IACS. The operation signal or operation command may comprise a trip signal or a trip command.

Thereby, the control device may be implemented as a control device for switchgear, such as a CB, switch, or other switchgear of an electric power system generation, distribution, and/or transmission system.

The at least one control circuit may be configured to output the operating signal or operating command to the at least one electric power system component.

Thereby, the control device may be implemented as a device separate from but coupled to the electric power system component.

The control device may be or may comprise an intelligent electronic device (IED). The IED may be configured to operate in accordance with IEC 61850.

According to another aspect of the invention, there is provided a mobile device configured to interact with a control device for at least one electric power system component. The mobile device comprises a mobile device communication interface; and at least one mobile device circuit configured to transmit data to the control device via the mobile device communication interface to cause the control device to be set to a local control mode if a user of the mobile device is at a first location local to the control device, wherein the local control mode is a control mode of the control device in which at least one control circuit of the control device is configured such that it reduces or eliminates the possibility of the at least one electric power system component being operated remotely responsive to a command received via a supervisory system; and enable the control device to be set to a remote control mode by the user of the mobile device from a second location remote to the control device, wherein the remote control mode is a control mode of the control device in which the at least one control circuit is configured to operate the at least one electric power system component responsive to a command received from a supervisory system.

Such a mobile device is configured to enable the user to interface with the control device without necessarily requiring physical interaction of the user with the control device. Safety is enhanced thereby. The mobile device also enables the control device to be set to a remote control mode by the user of the mobile device from a second location remote to the control device, providing greater versatility in returning the control device to the remote control mode. For illustration, the control device can be set to the remote control mode without requiring physical presence of the user of the mobile device at the control device.

The at least one mobile device circuit may be configured to provide user authentication data to the control device.

Thereby, the mobile device is configured to interface the user of the mobile device with the control device.

The at least one mobile device circuit may be configured to provide the user authentication data based on a biometric authentication of the user by the mobile device.

Thereby, the mobile device may be configured as an authentication device interfacing with the control device. Safety is enhanced by using biometric authentication.

The biometric authentication may comprise a face recognition, fingerprint recognition, and/or iris signature recognition. The mobile device may comprise an optoelectronic sensor, such as a camera sensor, to capture an image of the user and the at least one mobile device circuit may be configured to process the image of the user to perform the biometric authentication.

Safety is enhanced by using face recognition, fingerprint recognition, and/or iris signature recognition to determine an identity of the user.

The authentication data may comprise an authentication key required by the control device for authenticating the user of the mobile device.

Thereby, the mobile device may be configured to unlock a function of changing a control mode in the control device while ensuring authentication without requiring physical interaction of the user with the control device.

The mobile device may comprise a non-volatile storage. The at least one mobile device circuit may be configured to identify and retrieve authentication data stored in the non-volatile storage based on the biometric authentication to provide the authentication data to the control device.

The mobile device interface may comprise a mobile device wireless interface configured to provide the data.

Thereby, the data can be provided via a wireless communication channel, further reducing the need for physical interaction with the control device.

The mobile device may further comprise a sensor configured to capture a code output by the control device, the at least one mobile device circuit further configured to transmit the data to the control device based on the code.

Thereby, the mobile device may capture the information required for generation of the data and/or the request.

The code may comprise both parameters of a communication channel via which the data are transmitted and a unique control device identifier.

Thereby, the mobile device can capture information required for generation of the data and the request.

The code may comprise a wireless secure key and identifier for the control device. The code may be configured to enable the mobile device and control device to establish a communication channel via which the control device receives the data. The communication channel may be a temporary point-to-point wireless connection between the mobile device and the control device.

Thereby, the mobile device can capture information required for generation of the data and the request.

The code may comprise a visual code.

Thereby, the mobile device may capture information required for generation of the data and/or the request to the mobile device while ensuring that the mobile device.

The code may comprise a graphical code. The graphical code may comprise a two-dimensional graphical code and/or a barcode. The graphical code may comprise a two-dimensional barcode.

Thereby, the mobile device may capture information required for generation of the data and/or the request to the mobile device while ensuring that the mobile device.

The sensor configured to capture the code may comprise an optoelectronic sensor. The optoelectronic sensor may further be configured to capture an image of the user to perform the biometric authentication. At least two optoelectronic sensors may be provided and configured to capture the code and the image of the user.

Thereby, the information required to transmit the data and generate the request may be captured in an efficient manner using one or several optoelectronic sensor(s), such as one or several cameras.

The mobile device may be configured to store information included in the code in association with an identifier for the user (such as the authentication data) in a non-volatile mobile device storage. The stored information may comprise an authentication key included in the data and a code captured by the mobile device.

Thereby, the mobile device can store the information that identifies the control device and the user for generation of the request. The mobile device can retrieve this stored information for use as a token that the request to set the control device to the remote control mode originates from the user of the mobile device who used the mobile device when the control device was set to the local control mode.

The mobile device may be configured to receive the identifier for the user (such as the authentication data) via the mobile device communication interface.

Thereby, the mobile device can store the information that identifies the control device and the user selectively if the control device confirms that the user is authenticated with the control device.

The mobile device may comprise a mobile device output interface configured to output the information that identifies the control device and the user. The mobile device output interface may comprise a mobile device wireless interface and/or a mobile device display.

Thereby, the mobile device may output the information that acts as a token to ensure the identity of the user and the control device when the control device is set to the remote control mode. Safety is enhanced by the token that depends on both the user and the control device to allow the control device to be set back to the remote control mode from the second location by the same user who set the control device to the local control mode from the first location.

The mobile device may be configured to transmit the data via a wireless point-to-point communication channel.

Thereby, interaction of the user of the mobile device with the control device is facilitated. The need for physical interaction of the user with the control device is reduced.

There is also provided a supervisory system device for an electric power system. The supervisory system device comprises or is configured to be coupled to an acquisition device configured to capture information output by a mobile device, wherein the information includes a control device identifier and a user identifier. The supervisory system device comprises at least one supervisory system device circuit configured to generate, based on the acquired information, a request that causes a control device identified by the control device identifier to be set to a remote control mode.

Thereby, the control device may be set to the remote control mode remotely via the supervisory system.

The supervisory system device may comprise a Supervisory Control and Data Acquisition (SCADA) system and/or a fleet management (FLM) system device.

The acquisition device may comprise an optoelectronic sensor, such as a camera, configured to capture the information from a mobile device display.

Thereby, presence of the user and his/her mobile device within viewing distance of the supervisory system device may be ensured to generate the request.

The supervisory system device may be configured to receive, from the control device, reference information that depends on the control device identifier and the user identifier. The supervisory system device may be configured to generate the request based on a comparison of the reference information and the acquired information.

Thereby, it can be ensured that the control device is set to the remote control mode remotely by the user who caused the control device to be set to the local control mode.

The supervisory system device may be configured to determine, based on the acquired information, the control device. The supervisory system device may be configured to provide, based on the information, the user identifier to the control device.

Thereby, it can be ensured that the control device is set to the remote control mode remotely by the user who caused the control device to be set to the local control mode.

A system according to an embodiment comprises the control device according to an embodiment and the mobile device according to an embodiment and/or the at least one electric power system component.

The system may be an electric power system. The at least one electric power system component may be or may comprise a primary power system component. The at least one electric power system component may be or may comprise switchgear, such as a circuit breaker (CB), switch, disconnector, or other component configured to open and close an electric power connection.

The electric power system may be or may comprise a medium or high voltage power system, without being limited thereto. The electric power system may be or may comprise a renewables power system or a distributed energy resources (DER) system, without being limited thereto.

The system may comprise a Supervisory Control and Data Acquisition (SCADA) system and/or a fleet management (FLM) system comprising a supervisory system device according to an embodiment.

A method of controlling operation of a control device for an electric power system component. The method comprises receiving, by the control device, data from a mobile device; setting the control device to a local control mode based on the received data if a user of a mobile device is at a first location local to the control device, wherein at least one control circuit of the control device is configured such that, when the control device is in the local control mode, the at least one control circuit is configured such that it reduces or eliminates the possibility of the at least one electric power system component being operated remotely responsive to a command received via a supervisory system; and setting the control device to a remote control mode in response to an action of the user of the mobile device from a second location remote to the control device, wherein the at least one control circuit of the control device is configured such that, when the control device is in the remote control mode, the at least one control circuit is configured to operate the at least one electric power system component responsive to a command received from a supervisory system.

Such a control method provides various effects. The control device is set to the local control mode based on the received data from the communication interface, without necessarily requiring physical interaction of the user of the mobile device with the control device. The control device can be set to the remote control mode even when the user of the mobile device is at the second location remote to the control device. The need for physical presence at the control device for setting the control device to the remote control mode is thereby relaxed, provided that the request originates from the user of the mobile device.

The method may be performed by the control device according to an embodiment.

Optional features of the method of controlling operation of a control device and the effects attained thereby correspond to the features described in greater detail with reference to the control device.

There is also disclosed a method of changing a control mode of a control device for at least one electric power system component by a mobile device configured to interact with the control device. The method comprises transmitting data to the control device via the mobile device communication interface to cause the control device to be set to a local control mode if a user of the mobile device is at a first location local to the control device. The method comprises enabling the control device to be set to a remote control mode by the user of the mobile device from a second location remote to the control device.

Such a method enables the user to interface with the control device without necessarily requiring physical interaction of the user with the control device. Safety is enhanced thereby. The method also enables the control device to be set to a remote control mode by the user of the mobile device from a second location remote to the control device, providing greater versatility in returning the control device to the remote control mode. For illustration, the control device can be set to the remote control mode without requiring physical presence of the user of the mobile device at the control device.

The method may be performed by the mobile device according to an embodiment.

Optional features of the method of changing a control mode of a control device and the effects attained thereby correspond to the features described in greater detail with reference to the mobile device.

According to another embodiment, there is provided a method of changing a control mode of a control device by a supervisory system device for an electric power system. The method comprises capturing information output by a mobile device, wherein the information includes a control device identifier and a user identifier. The method comprises generating, based on the acquired information, a request that causes a control device identified by the control device identifier to be set to a remote control mode.

The method has the effect that the control device may be set to the remote control mode remotely via the supervisory system.

The method may be performed by the supervisory system device according to an embodiment.

Optional features of the method of changing a control mode of a control device and the effects attained thereby correspond to the features described in greater detail with reference to the supervisory system device and/or the supervisory system.

There is also provided machine-readable instruction code which, when executed by at least one programmable circuit, causes the programmable circuit to perform the method according to an embodiment.

There is also disclosed a non-transitory storage medium having stored thereon machine-readable instruction code which, when executed by at least one programmable circuit, causes the programmable circuit to perform the method according to an embodiment.

Various effects and advantages are attained by embodiments of the invention. For illustration, the devices, systems, and methods according to embodiments allow a control device to be set to a local control mode without necessarily requiring a physical contact of a user (e.g., maintenance engineer) with the control device. Safety is enhanced thereby. The devices, systems, and methods according to embodiments also provide a mechanism to set the control device to a remote control mode from a location remote to the control device. Thereby, the need for physical presence of the user (e.g., maintenance engineer) at the control device is reduced, which further increases efficiency and safety. The devices, systems, and methods according to embodiments may also allow the control device to be set to the remote control mode from the first location, thereby providing enhanced versatility in how the user of the mobile device can interact with the control device.

The devices, systems, and methods can be used for changing a control mode of a control device of an IACS, such as a SA system, without being limited thereto.

### BRIEF DESCRIPTION OF THE DRAWINGS

Embodiments of the invention will be described with reference to the drawings in which similar or identical reference signs designate elements with similar or identical configuration and/or function.
Figure 1 is a block diagram of a control device for at least one electric power system component.
Figure 2 is a block diagram of a control device for at least one electric power system component.
Figure 3 is a block diagram of a control device for at least one electric power system component.
Figure 4 is a block diagram of a control device for at least one electric power system component.
Figure 5 is a flow chart of a method performed by a control device.
Figure 6 is a flow chart of a method performed by a control device.
Figure 7 is a flow chart of a method performed by a control device.
Figure 8 is a block diagram of a mobile device.
Figure 9 is a block diagram of a mobile device.
Figure 10 is a block diagram of a mobile device.
Figure 11 is a flow chart of a method performed by a mobile device.
Figure 12 is a flow chart of a method performed by a mobile device.
Figure 13 is a diagram showing operation of a system.
Figure 14 is a view of a system when a user is at a first location local to a control device.
Figure 15 is a view of the system when the user is at a second location remote to the control device.

### DETAILED DESCRIPTION OF EMBODIMENTS

Embodiments of the invention will be described with reference to the drawings. In the drawings, similar or identical reference signs designate elements with similar or identical configuration and/or function.

While embodiments will be described in association with control devices configured to control switchgear, the embodiments are not limited thereto.

The features of embodiments may be combined with each other unless specifically stated otherwise.

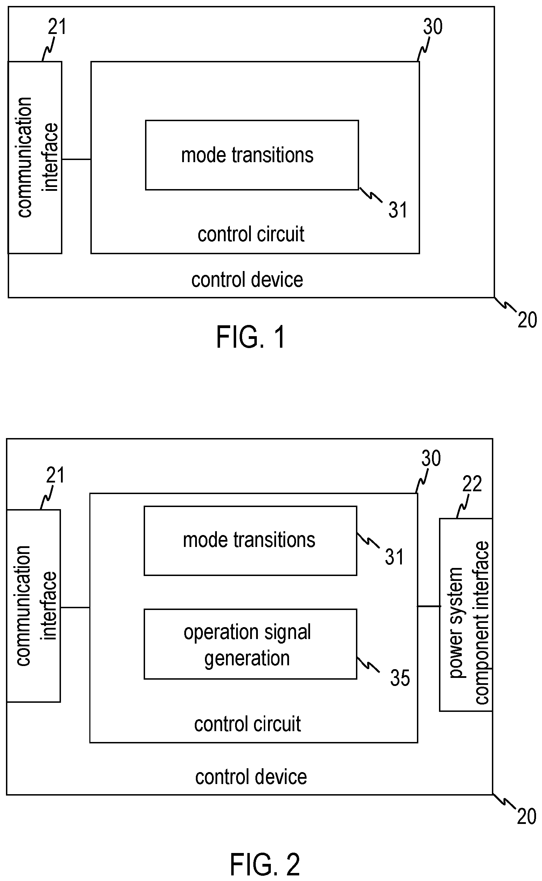

Figure 1 shows a control device 20 for at least one electric power system component. The control device 20 comprises at least one control circuit 30. The at least one control circuit 30 is configured to be coupled to a communication interface 21. The at least one control circuit 30 is configured to be coupled to the at least one electric power system component.

The control device 20 has different control modes. The different control modes may comprise a local control mode and a remote control mode.

The at least one control circuit 30 is configured to perform transitions between different control modes of the control device 20. The at least one control circuit 30 is configured to receive data from the communication interface 21 and set the control device 20 to the local control mode based on the received data if a user of a mobile device is at a first location local to the control device 20.

The at least one control circuit 30 is further configured to set the control device to the remote control mode in response to a request of the user of the mobile device from a second location remote to the control device 20.

The at least one control circuit 30 may further be configured to set the control device 20 to the remote control mode in response to a request of the user of the mobile device from the first location local to the control device 20. Thus, the at least one control circuit 30 may be configured to or set the control device 20 to the remote control mode in response to a request from the user of the mobile device which may be generated either at the first location local to the control device or at the second location remote to the control device.

The at least one control circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The at least one control circuit 30 may comprise a control mode transitions circuitry 31 configured to control transitions between the control modes of the control device 20. A change in control mode may be performed based on a determination that a user of a mobile device interacting with the control device 20 is authenticated to trigger the change in control mode. The at least one control circuit 30 may perform additional authentication operations when a request to set the control device 20 to the remote control mode is received from the second location remote to the control device 20. These additional authentication operations may be performed to ensure that the control device 20 set to the remote control mode from the second location remote to the control device 20 by the user who caused the control device 20 to be set to the local control mode from the first location local to the control device 20.

The control device 20 may be configured to perform different actions to operate the at least one electric power system component, depending on the control mode of the control device 20. For illustration, and as will be explained in more detail below, the control device 20 may be configured to react differently to incoming signals, data, commands, or requests, depending on whether the control device 20 is in the local control mode or in the remote control mode.

Figure 2 shows a control device 20. Features and components described with reference to Figure 1 are designated with the same reference signs as in Figure 1.

The control device 20 further comprises a power system component interface 22 configured to be communicatively coupled to the at least one electric power system component.

The control device 20 may further be configured to generate and output operation signals or operation commands that operate the at least one electric power system component. The operation signals or operation commands may cause switchgear of the at least one electric power system component to trip. For illustration, the control device 20 may cause a circuit breaker (CB), switch, or other switchgear to trip.

The at least one control circuit 30 may comprise operation signal generation circuity 35 configured to generate operation signals or operation commands for outputting via the power system component interface 22.

The at least one control circuit 30 may be configured such that, when the control device 20 is in the local control mode, the operation signal generation circuity 35 operates the at least one electric power system component responsive to signals or commands from the first location proximal to the control device 20. The first location may comprise or may be a substation in which the control device 20 is installed.

The at least one control circuit 30 may be configured such that, when the control device 20 is in the remote control mode, the operation signal generation circuity 35 operates the at least one electric power system component responsive to signals or commands from a second location remote to the control device. The second location may be arranged outside of the substation in which the control device 20 is installed. For illustration, the second location may be at a control center or another location at which a supervisory system of the electric power system allows a user to interface with the supervisory system.

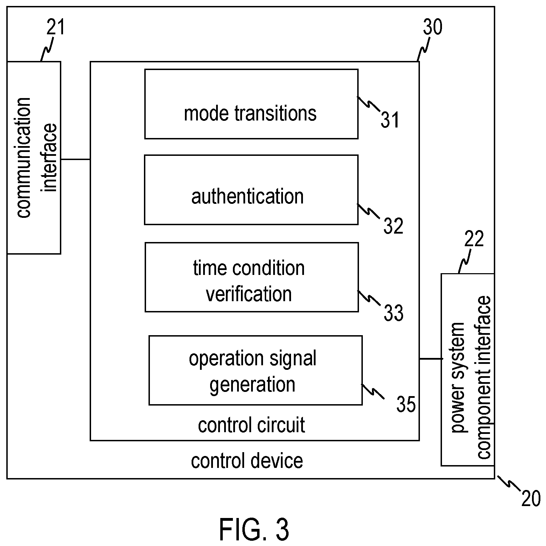

Figure 3 shows a control device 20. Features and components described with reference to Figures 1 and 2 are designated with the same reference signs as in Figures 1 and 2.

The control device 20 may further comprise authentication circuitry 32. The authentication circuitry 32 may be configured to determine, based on data received at the at least one communication interface 21, whether the data or request received at the at least one communication interface 21 originates from a user authorized to trigger a change in control mode.

The authentication circuitry 32 may be configured to process the data received from the mobile device at the at least one communication interface 21 to retrieve therefrom an authentication key or other authentication data. The authentication circuitry 32 may be configured to compare the received authentication data to authentication data stored in a non-volatile manner in a storage 24 of the control device 20. The control device 20 may be configured such that the at least one control circuit 30 sets the control device 20 to the local control mode based on the data if the authentication circuitry 32 determines that the user of the mobile device is authorized to set the control device 20 to a local control mode. The authentication circuitry 32 may further be configured to process a request that may be received from a supervisory system to determine whether the request originates from the user of the mobile device will cause the control device 20 to be set to a local control mode.

The authentication circuitry 32 may be configured to store the authentication data in a non-volatile control device storage 24 for subsequent use when an identity of the user has to be as ascertained. For illustration, the authentication circuitry 32 may store authentication data received from the mobile device in the storage 24. The authentication circuitry 32 may retrieve the stored authentication data when processing the request that is received when the user is at the second location remote to the control device 20.

The control device 20 may further be configured such that it limits the possibility to set the control device 20 to the remote control mode from the second location remote to the control device 20. The control device 20 may use various criteria, such as, without limitation, time-based criteria to limit the possibility to set the control device 20 to the remote control mode from the second location. The control device 20 may comprise a time condition verification circuitry 33 configured to check whether the request is received within a given time interval after the control device 20 has been set to the local control mode. The time condition verification circuitry 33 may comprise a timer that is started when the control device 20 set to the local control mode based on the received data. When the request is received, the time condition verification circuitry 33 may be configured to compare the time elapsed since the control device has been set to the local control mode to the given time interval. The control circuit 30 is configured to set the control device 20 to the remote control mode based on the request if the request is received within the given time interval.

The control device 20 may be configured such that a duration of the given time interval is adjustable. The duration of the given time interval may be set when configuring or commissioning the control device 20. The duration of the given time interval may be adjustable by an operator of the electric power system during field use of the control device 20.

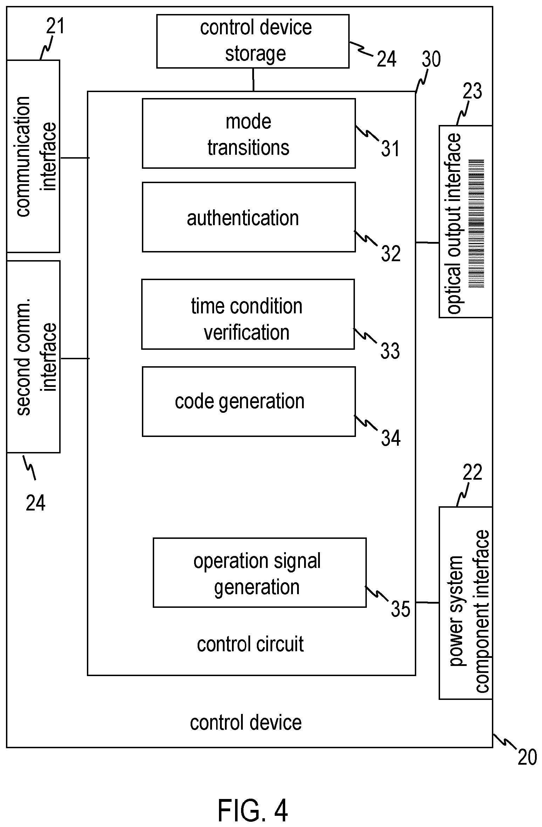

Figure 4 shows a control device 20. Features and components described with reference to Figures 1 to 3 are designated with the same reference signs as in Figures 1 to 3.

The control device 20 may further comprise code generation circuitry 34. The code generation circuitry 34 may be configured to generate and output a code comprising at least one of parameters of a communication channel via which the data are received from the mobile device. The code may comprise both parameters of a communication channel via which the data are received and a unique control device identifier. The code may comprise a wireless secure key and identifier for the control device 20. The code may be configured to enable the mobile device and control device to establish a communication channel via which the control device 20 receives the data. The control device 20 may be configured such that the code defines parameters for a communication channel that is a temporary point-to-point wireless connection between the mobile device and the control device 20. Thereby, the control device 20 can provide information required for generation of the data and the request to the mobile device.

The code may comprise a visual code. The control device 20 may further comprise an optical output interface 25 configured to output the code. Thereby, the control device 20 can provide information required for generation of the data and/or the request to the mobile device while ensuring that the mobile device must be at the first location (e.g., within viewing distance from the control device 20). The optical output interface 25 may be a control device display arranged within a housing of the control device 20 so as to expose a display area for reading the code.

The code generation circuitry 34 and the optical output interface 25 may be configured such that the code comprises a graphical code. The graphical code may comprise a two-dimensional graphical code and/or a barcode. The graphical code may comprise a two-dimensional barcode.

The at least one communication interface of the control device 20 may comprise more than one communication interface. For illustration, the control device 20 may have a first communication interface 21 and a second communication interface 24. The first communication interface 21 may be configured to receive the data from the mobile device via a wireless communication channel. The wireless communication channel may be a communication channel of a wireless point-to-point connection. The control device 20 may be configured to transmit confirmation data to the mobile device via the first communication interface 24 while the mobile device is at the first location local to the control device 20.

The second communication interface 24 may but does not need to be configured to receive data directly from the mobile device. The second communication interface 24 may be configured to communicatively interface the control device 20 with a supervisory system, such as a Supervisory Control and Data Acquisition (SCADA) system and/or a fleet management (FLM) system. The second communication interface 24 may be a wired interface.

The control device 20 may be configured to receive the data from the mobile device via the first communication interface 21. The control device 20 may be configured to receive the request to set the control device 20 to the remote control mode via the second communication interface 24, if the request is generated remotely to the control device 20. The control device 20 may further be configured to receive the request to set the control device 20 to the remote control mode via the first communication interface 21, if the request is generated locally to the control device 20.

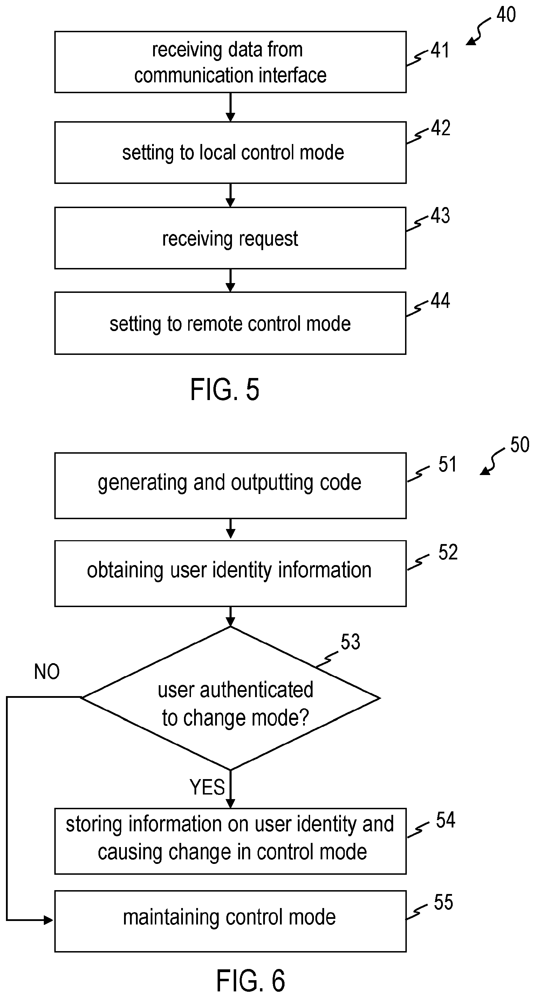

Figure 5 is a flow chart of a method 40 of operating a control device for at least one electric power system component. The method 40 may be performed automatically by the control device 20.

At process block 41, at least one control circuit of the control device receives data from a communication interface. The data may be received at the communication interface via a wireless communication channel, such as a wireless point-to-point connection.

At process block 42, the at least one control circuit sets the control device to a local control mode based on the received data. Setting the control device to a local control mode may comprise authenticating a user of the mobile device based on the received data. Information on an identity of the user, such as authentication data for the user or a unique use identifier may be stored in the control device for subsequent use.

At process block 43, the control device receives a request to set the control device to a remote control mode. The request may but does not have to be received via a wireless interface. The request may be received from a SCADA or FLM system.

At process block 44, at least one control circuit sets the control device to the remote control mode based on the received request. Setting the control device to the remote control mode may comprise verifying that the request originates from the user of the mobile device who caused the data received at process block 41 to be transmitted to the control device.

While the request at process block 43 can originate from a second location remote to the control device, the control device may be configured such that it can also be set to the remote control mode using a request that originates from the first location local to the control device (e.g., within the substation in which the control device is installed).

Figure 6 is a flow chart of a method 50 of operating a control device for at least one electric power system component. The method 50 may be performed automatically by the control device 20. The method 50 may be performed to set the control device to the local control mode. The method 50 may be performed to implement process block 42 of method 40.

At process block 51, the control device generates and outputs a code. The code may comprise both parameters of a communication channel via which the data are received and a unique control device identifier. The code may comprise a wireless secure key and identifier for the control device. The code may be configured to enable the mobile device and control device to establish a communication channel via which the control device receives the data. The control device may be configured such that the code defines parameters for a communication channel that is a temporary point-to-point wireless connection between the mobile device and the control device. Thereby, the control device can provide information required for generation of the data and the request to the mobile device.

The code may comprise a visual code. Outputting the code may comprise outputting the visual code via a display of the control device. The visual code may comprise a graphical code. The graphical code may comprise a two-dimensional graphical code and/or a barcode. The graphical code may comprise a two-dimensional barcode.

At process block 52, the control device obtains information about an identity of a user of a mobile device located at a first location local to the control device. Obtaining the information about the identity of the user may comprise retrieving authentication data, based on data received at an interface of the control device. The data received at the interface may be data transmitted by the mobile device in accordance with communication parameters specified in the code generated and output at process block 51.

At process block 53, it is determined whether uses authenticated to change the control mode of the control device. Determining whether uses authenticated to change the control mode may comprise determining, based on the received data, whether authentication data included in the received data matches authentication data start locally in the control device.

At process block 54, if the user is authenticated to effect a change in control mode, information on the identity of the user is stored in the control device for subsequent use. The control mode is set to the local control mode.

At process block 55, if the user is determined to be not authorized to effect a change in control mode, there control mode may be maintained as remote control mode.

Thereby, the control device may provide information required for generation of the data and/or the request to the mobile device while ensuring that the mobile device must be within viewing distance.

The control device may be configured to store information included in the code in association with an identifier for the user in a non-volatile control device storage and/or remotely in a supervisory system. The stored information may comprise an authentication key included in the data and a code generated by the control device to enable the control device and the mobile device to establish a communication channel.

Thereby, the control device can ensure that the request to set the control device to the remote control mode originates from the user of the mobile device who used the mobile device when the control device was set to the local control mode.

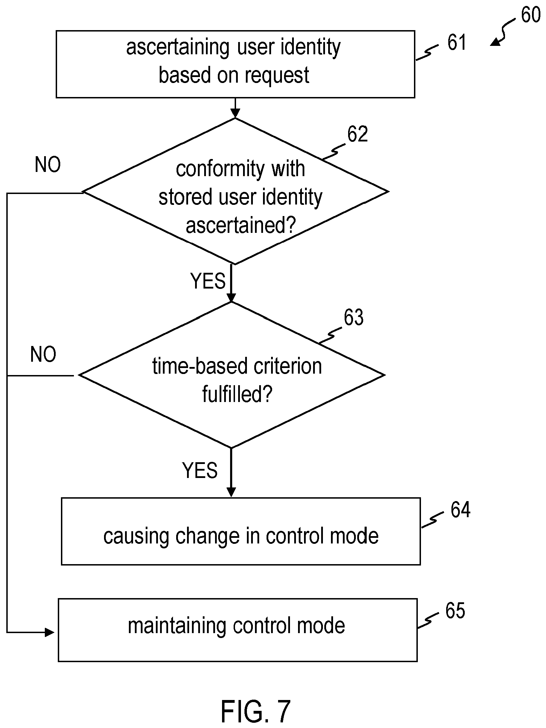

Figure 7 is a flow chart of a method 60 of operating a control device for at least one electric power system component. The method 60 may be performed automatically by the control device 20. The method 60 may be performed to set the control device to the remote control mode. The method 60 may comprise performing another user authentication before the control device is set to the remote control mode. The method 60 may be performed to implement process block 44 of method 40.

At process block 61, the control device ascertains an identity of the user based on a received request. The request may be a request to set the control device to a remote control mode. The request may be received from a second location remote to the control device. The request may be received from a supervisory system device arranged remotely to the control device, e.g. arranged outside a substation in which the control device is provided. Authentication data may be retrieved from the request. The authentication data may be uniquely assigned to one user.

At process block 62, the control device determines whether the ascertained user identity conforms with a previously stored user identity. The previously stored user identity may comprise data that uniquely identifies the user of a mobile device which triggered the control device to be set to the local control mode. The previously stored user identity may be stored locally in the control device or remotely from the control device, e.g., in a supervisory system.

At process block 63, if the ascertained user identity conforms with the stored user identity of the user, the control device may optionally determine whether a time-based criterion is fulfilled. The time-based criterion may comprise a timeout criterion. The time-based criterion may comprise checking whether a time period that has elapsed from a local control mode transition time at which the control device was set to the local control mode (e.g., from receipt of the data from the communication interface or from the time at which the at least one control circuit set the control device to the local control mode) is less than a threshold upon receipt of the request. The threshold may be settable. The time-based criterion mitigates the risk of inadvertent control mode changes.

At process block 64, if the ascertained user identity conforms with the stored user identity and if the time-based criterion is fulfilled, the control device is set to the remote control mode.

At process block 65, if the ascertained user identity does not conform with the stored user identity or if the time-based criterion is not fulfilled, the local control mode of the control device is maintained. In this case, the user of the mobile device can set the control device to the remote control mode by visiting the first location local to the control device.

The control device 20 according to any one of Figures 1 to 4, which may perform the method of any one of Figures 5 to 7, may be an Intelligent Electronic Device (IED). The control device 20 may be configured to interface with data acquisition units, such as merging units (MUs), to operate the at least one electric power system component. The control device 20 may be configured to interface with a supervisory system, such as a SCADA or FLM system. The control device 20 may be configured to operate switchgear, such as a CB or switch. The control device 20 may be installed in a substation of an electric power system, e.g., in a substation of a high- or medium-voltage power system or a DER system. The control device 20 may be an IED configured to operate in a manner that is compatible with IEC 61850.

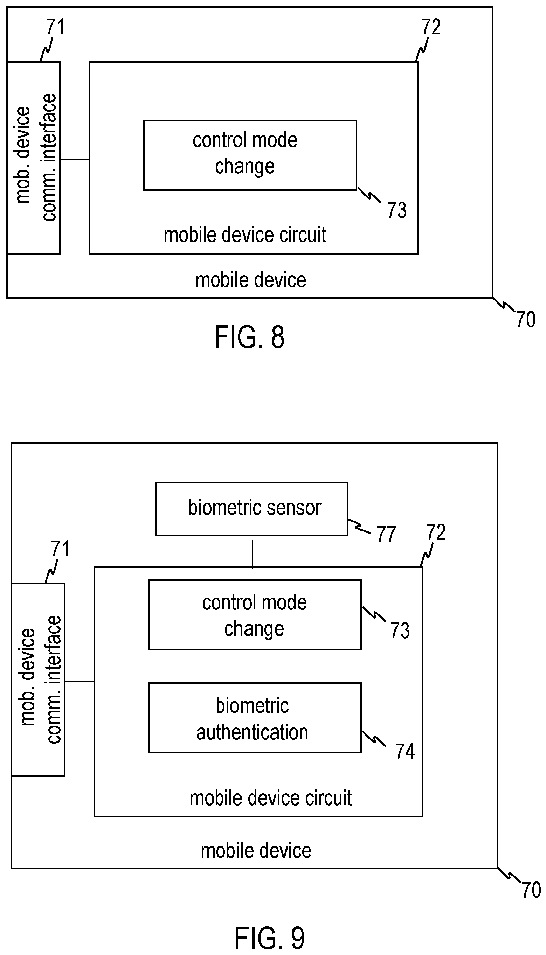

The control device 20 is configured to communicatively interface with a mobile device. A configuration and operation of the mobile device will be explained in more detail with reference to Figures 8 to 12.

Figure 8 shows a mobile device 70. The mobile device 70 is configured to interact with a control device (such as control device 20 described with reference to any one of Figures 1 to 4) for at least one electric power system component.

The mobile device 70 comprises a mobile device communication interface 71. The mobile device 70 comprises at least one mobile device circuit 72.

The mobile device circuit 72 is configured to transmit data to the control device via the mobile device communication interface 71 to cause the control device to be set to a local control mode if a user of the mobile device 70 is at a first location local to the control device.

The mobile device circuit 72 is configured to enable the control device to be set to a remote control mode by the user of the mobile device 70 from a second location remote to the control device.

Thus, the mobile device 70 is configured to allow the control device to be set to the local control mode while reducing the need for direct physical contact of the user with the control device at the first location. The mobile device 70 can act as an interface device configured to interface the user with the control device.

The mobile device 70 is configured to allow the control device to be set to the remote control mode without requiring the user of the mobile device to be present at the first location local to the control device. The mobile device 70 may be configured as a token which provides data or other information required to set the control device to the remote control mode from the second location. For illustration, the mobile device 70 is configured to enable the control device to be set to the remote control mode from a supervisory system device installed outside of a substation in which the control device is installed or another location remote to the control device.

The mobile device 70 may additionally be configured to generate and transmit a request to set the control device to the local control mode while the mobile device 70 is at the first location local to the control device.

The mobile device 70 may comprise mode control circuitry 73 configured to generate data to set the local device to the remote control mode. The mobile device 70 may be configured to transmit the generated data via the at least one mobile device communication interface 71. The mobile device 70 may be configured to control a mobile device wireless interface of the at least one mobile device communication interface 71 to transmit the data over a wireless point-to-point connection.

The mode control circuitry 73 may be configured to generate and provide information that enables the control device to be set to the remote control mode. This information may but does not need to be output via the at least one mobile device communication interface 71. The information that enables generation of the request to set the control device to the remote control mode may be output via an interface of the mobile device under the control of the mobile device control circuit 72 via an interface different from the at least one mobile device communication interface 71, such as a graphical user interface (GUI).

The mobile device 70 may be configured to perform a biometric authentication of the user prior to generating and transmitting the data to set the control device to the remote control mode and/or prior to providing the information that enables the control device to be set to the remote control mode.

Figure 9 shows a mobile device 70. Features and components described with reference to Figure 8 are designated with the same reference signs as in Figure 8.

The mobile device 70 comprise biometric authentication circuitry 74 configured to perform a biometric authentication of the user. The biometric authentication circuitry 74 may be coupled to a biometric sensor 77. The biometric sensor 77 may comprise an optoelectronic sensor, such as a camera sensor of the mobile device 70. The biometric sensor 77 may be configured to capture an image of the user of the mobile device 70. The biometric authentication circuitry 74 may perform a biometric authentication based on face recognition processing and/or iris signature recognition processing of the captured image. Other biometric authentication components may be used, such as a fingerprint sensor.

The mobile device 70 may be configured such that the data is transmitted to the control device selectively based on successful biometric authentication of the user. The mobile device 70 may be configured such that data content of the transmitted data, such as authentication data included in the transmitted data, is dependent on an output of the biometric authentication circuitry 74.

The mobile device 70 may be configured such that the information that enables the control device to be set to the local control mode is provided selectively based on another successful biometric authentication of the user. The mobile device 70 may be configured such that at least pieces of the information, such as a device identifier for the control device and/or a user identifier for the user, is dependent on an output of the biometric authentication circuitry 74.

For illustration, the mobile device 70 may be configured such that an identity of a user of the mobile device 70 is ascertained based on the another biometric authentication. The mobile device 70 may be configured to retrieve a unique identifier for a control device that was previously set to the local control mode by the identified user. The mobile device 70 may provide information that depends both on the retrieved unique identifier for the control device and the identified user to enable the control device to be set to the remote control mode.

The at least one mobile device circuit 72 may be configured to generate and transmit the data to the control device based on a biometric authentication. The at least one mobile device circuit 72 may be configured to provide the user authentication data based on the biometric authentication of the user by the mobile device 70. The authentication data may comprise an authentication key required by the control device for authenticating the user of the mobile device 70. The mobile device may comprise a non-volatile storage. The at least one mobile device circuit 72 may be configured to identify and retrieve authentication data stored in the non-volatile storage based on the biometric authentication to provide the authentication data to the control device.

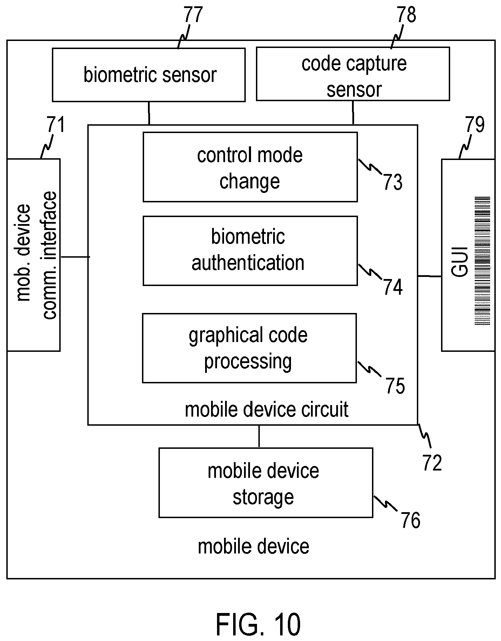

Figure 10 shows a mobile device 70. Features and components described with reference to Figures 8 and 9 are designated with the same reference signs as in Figures 8 and 9.

The mobile device 70 further comprises a code capture sensor 78. The code capture sensor 78 may comprise another optoelectronic sensor, such as another camera sensor. The biometric sensor 77 and code capture sensor 78 may be integrated into a same camera chip or may be separate camera sensors. For illustration, the code capture sensor 78 may comprise a first camera sensor of the mobile device 70 facing in a first viewing direction (such as a front facing camera sensor). The biometric sensor 77 may comprise a second camera sensor of the mobile device 70 facing a second viewing direction (such as a user-facing camera sensor) different from the first viewing direction.

The code capture sensor 78 may be configured to capture a code output by the control device. The at least one mobile device circuit 72 may further comprise graphical code processing circuitry 75 configured to transmit the data to the control device based on the captured code. The code may comprise parameters of a communication channel via which the data are transmitted. The parameters of the communication channel may comprise parameters of a wireless point-to-point communication channel via which the data are transmitted. The parameters may comprise a wireless secure key. The code may be configured to enable the mobile device 70 to establish a communication channel with the control device to transmit the data to the control device. The communication channel may be a temporary point-to-point wireless connection between the mobile device 70 and the control device.

The code may comprise a visual code that can be captured by a code capture sensor 78 that comprises the another optoelectronic sensor. The code may be embodied in other ways, such as a signal transmitted in a wired or wireless manner.

The code may comprise a graphical code. The graphical code may comprise a two-dimensional graphical code and/or a barcode. The graphical code may comprise a two-dimensional barcode. The graphical code processing circuitry 75 may be configured to process the graphical code to determine the parameters of the communication channel via which the data are transmitted based on the graphical code.

The code may also comprise a unique identifier for the control device. The graphical code processing circuitry 75 may be configured to process the graphical code to determine the unique identifier for the control device. The unique identifier for the control device may be stored in a non-volatile mobile device storage 76 for maintaining a dataset defining in a user-specific manner which control devices were set to the local control mode using the mobile device 70.

The mobile device 70 may be configured to store information included in the code in association with an identifier for the user (such as the authentication data) in the non-volatile mobile device storage 76. The stored information may comprise an authentication key of the user (such as an authentication key stored back in the mobile device 70 in response to a confirmation from the control device 20) and a code captured by the mobile device.

The mobile device may comprise a mobile device output interface. The mobile device output interface may comprise a GUI 79. The GUI may be configured to output information that identifies the control device and the user. By provision of the information that identifies the control device and the user, the mobile device 70 is configured to be a token to ensure the identity of the user and the control device when the control device is set to the remote control mode. The mobile device 70 may be configured in such a manner that the mobile device 70 is required to enable the control device to be set to the remote control mode from the second location remote to the control device.

The mobile device 70 may be configured to maintain a record in the non-volatile mobile device storage 76 which indicates, for each user, which control device or which control devices has or have been set to the local control mode by the respective user of the mobile device. Information on this control device or these control devices may be output via the GUI 79 of the mobile device.

The GUI 79 may enable the user, after biometric authentication, to select one of the control devices recorded as having been set to the local control mode by the user. The mobile device 70 may be configured to generate and output information, based on the selection, which enables the selected control device to be set to the local control mode if the user is at the second location remote to the control device. The mobile device 70 may be configured to generate and transmit a request to the selected control device, based on the selection, to cause the control device to be set to the local control mode if the user is still at the first location local to the control device.

The mobile device 70 of any one of Figures 8 to 10 may be a portable device. The mobile device 70 may be a handheld device. The mobile device 70 may be a terminal of a cellular communication network.

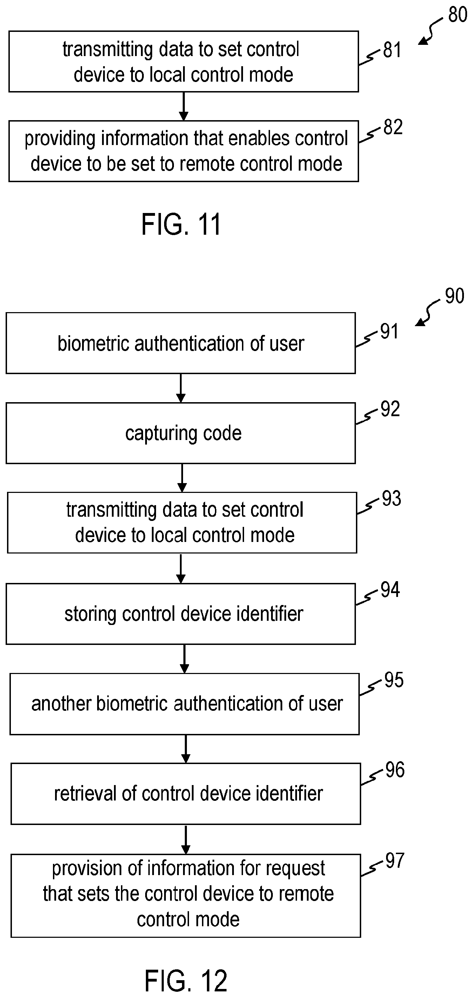

Figure 11 is a flow chart of a method 80. The method 80 may be performed by the mobile device 70 of any one of Figures 8 to 10.

At process block 81, the mobile device transmits data to a control device for at least one electric power system component to set the control device to a local control mode when a user of the mobile device is at a first location local to the control device (e.g., at or in a substation in which the control device is installed). The data may comprise authentication data for the user. The data may be transmitted using parameters of a communication channel captured by the mobile device from the control device.

At process block 82, the mobile device provides information that enables the control device to be set to the remote control mode when the user of the mobile device is at a second location remote to the control device (e.g., at a supervisory system device remote to the substation in which the control device is installed).

The information may be provided via a display or other optical output device of the mobile device.

The provided information at process block 82 may be dependent on both the control device that is to be set to the remote control mode and the user of the mobile device. This enables a check to be performed to ensure that the control device is set to the remote control mode from the remote location by the same user who set the control device to the local control mode while at the first location.

Figure 12 is a flow chart of a method 90. The method 90 may be performed by the mobile device 70 of any one of Figures 8 to 10.

At process block 91, the mobile device performs a biometric authentication of a user of the mobile device. The biometric authentication may comprise a face recognition, fingerprint recognition, and/or iris signature recognition. The subsequent process blocks are performed based on the biometric authentication being successful and showing that the user of the mobile device being authenticated with the mobile device to initiate a change in control mode of a control device for at least one electric power system component.

At process block 92, the mobile device captures a code from the control device. The code may be a visual code captured using an optoelectronic sensor of the mobile device. The code may comprise a graphical code, a barcode, and/or a two-dimensional barcode. The code may comprise parameters of a communication channel via which the mobile device can transmit data to the control device and, optionally, receive data from the control device. Process block 92 is performed while the user is at a first location local to the control device (e.g., at or in a substation in which the control device is installed).

At process block 93, the mobile device transmits data to the control device to set the control device to a local control mode when the user of the mobile device is at the first location local to the control device. The data may comprise authentication data for the user. The data may be transmitted using parameters of the communication channel captured by the mobile device from the control device at process block 92.

At process block 94, the mobile device stores a control device identifier for the control device. The mobile device may store the control device identifier in association with an identifier for the user authenticated at process block 91. The mobile device may store the control device identifier locally in the mobile device.

At process block 95, the mobile device performs another biometric authentication of the user of the mobile device. The another biometric authentication may comprise another face recognition, another fingerprint recognition, and/or another iris signature recognition. The subsequent process blocks are performed based on the another biometric authentication showing that the user of the mobile device is authenticated with the mobile device to initiate a change in control mode of the control device.

At process block 96, the mobile device retrieves the control device identifier. The mobile device may retrieve the control device identifier based on an identity of the user ascertained in the another biometric authentication at process block 95.

At process block 97, the mobile device provides information that enables the control device to be set to the remote control mode when the user of the mobile device is at a second location remote to the control device (e.g., at a supervisory system device remote to the substation in which the control device is installed).

At process block 97, the information may be provided via a display or other optical output device of the mobile device for acquisition by an acquisition device of a supervisory system (such as a SCADA or FLM system).

The provided information at process block 97 may be dependent on both the control device that is to be set to the remote control mode and the user of the mobile device. This enables a check to be performed to ensure that the control device is set to the remote control mode from the remote location by the same user who set the control device to the local control mode while at the first location.

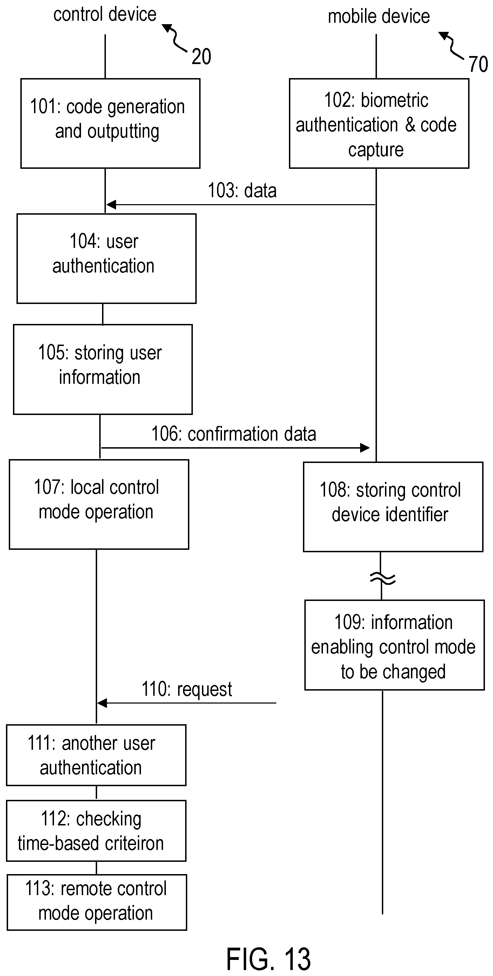

Figure 13 is a diagram of a system comprising the control device 20 and the mobile device 70. The control device 20 may have any of the configurations and functions disclosed in association with Figures 1 to 7. The mobile device 70 may have any of the configurations and functions disclosed in association with Figures 8 to 12.

At 101, the control device 20 generates and output a code. The code may be output via a control device display or other optical output device of the control device 20. The code may comprise communication parameters of a communication channel via which the control device 20 can receive data from the mobile device 70.

At 102, the mobile device 70 performs a biometric authentication of a user of the mobile device and captures the code. The biometric authentication may comprise a face recognition, fingerprint recognition, and/or iris signature recognition of the user. The mobile device 70 generates data for transmission to the control device 20 based on a result of the biometric authentication. For illustration, the data may be generated to include an authentication key or other authentication data which is stored in the mobile device for the user identified by the biometric authentication. The data may also be dependent on the communication parameters in the captured code, e.g., when the communication parameters comprise a secure key to be used for generating the data.

At 103, the mobile device 70 transmits the data 103 to set the control device to the local control mode. Modulation of the data 103 into a signal may also be dependent on the communication parameters included in the code output by the control device 20 at 101. The data may comprise the authentication key or other authentication data for the user to authenticate the user of the mobile device with the control device 20.

At 104, the control device performs an authentication of the user. The authentication at 104 is different from the biometric authentication at 102. The authentication at 104 may be performed based on the data 103. The authentication at 104 may be performed based on an authentication key or other authentication data of the user of the mobile device included in the data 103.

At 105, the control device stores user information of the user of the mobile device. The user information may be any unique identifier for the user, such as the authentication key or other authentication data included in the data 103. The control device may store the user information locally at the control device or in a supervisory system.

At 106, the control device outputs confirmation data. The confirmation data may indicate that the user is authenticated not only with the mobile device 70 but also with the control device 20. The confirmation data may include the unique identifier for the user which may thereby be stored back in the mobile device 70.

At 107, the control device is set to the local control mode. The control device 20 may be set to the local control mode responsive to the data 103 if the user is authenticated with the control device or responsive to a further transmission from the mobile device 70 (not shown in Figure 13).

At 108, the mobile device may store a unique control device identifier for the control device. The unique control device identifier may be included in the code captured at 102. The unique control device identifier may be stored in association with the user identified in the biometric authentication at 102.

At 109, the mobile device provides information that enables the control device to be set to the remote control mode. The provision of the information may be dependent on that the mobile device is being used by the same user as at process block 102. Another biometric authentication may be performed by the mobile device 70 to ascertain the identity of the user of the mobile device. Provision of the information may comprise outputting the information (e.g., via a mobile device display) for acquisition and use by a supervisory system.

At 110, the control device receives a request 110 to set the control device to the remote control mode. The request 110 may but does not need to be generated by the mobile device 70. For illustration, the mobile device may output the information at 109 via a mobile device display for acquisition by a supervisory system. A supervisory system device of the supervisory system may then generate the request 110. The request 110 may include an authentication key or other authentication data of the user.

At 111, the control device 20 may perform another user authentication. The further user authentication may be performed based on the authentication key or other authentication data of the user included in the request 110. The another user authentication may comprise checking, based on the request 110, that the user of the mobile device providing the information at 109 is authenticated with the control device 20 to request a change in control mode. The another user authentication may comprise verifying, based on the authentication key or other authentication data of the user included in the request 110, that the user of the mobile device providing the information at 109 is the same user who caused the control device 20 to be set to the local control mode and whose identity was stored at 105.

At 112, the control device 20 may optionally check that a time-based criterion is fulfilled. For illustration, the request 110 may be processed selectively based on whether the request 110 is received within a given time period after the data 103 was received or after the local control mode operation was initiated at 107.

At 113, the control device 20 is set to the remote control mode if both the another user authentication at 111 and the time-based criterion at 112 have been successful.

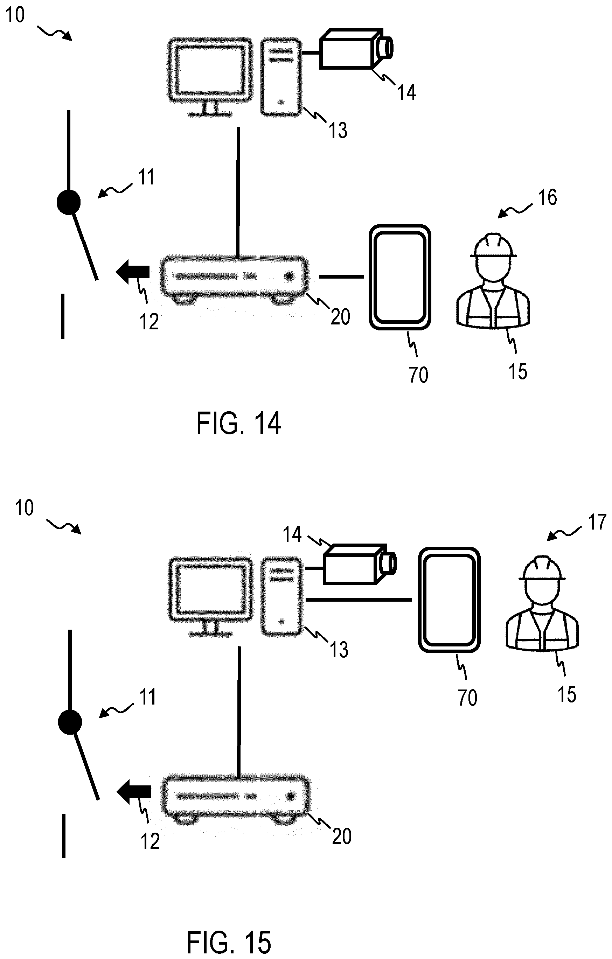

Figures 14 and 15 show a system 10. The system 10 comprises at least one electric power system component 11. The at least electric power system component 11 may comprise switchgear, such as a CB, a switch, or a disconnector. The switchgear may comprise switchgear of a high- or medium voltage electric power system or of a DER system, without being limited thereto.

The system 10 comprises a control device 20 configured to operate the at least one electric power system component 11 by issuing an operation signal or command 12. The control device 20 may have a configuration and functionality as described in association with any one of Figures 1 to 7 or 13.

The system 10 comprises a mobile device 70 configured to interact with the control device 20. The mobile device 70 may also be configured to interact with a supervisory system. The mobile device 70 may have a configuration and functionality as described in association with any one of Figures 8 to 13.

The system 10 comprises a supervisory system having a supervisory system device 13. An acquisition device 14, such as a camera, may be comprised by or coupled to the supervisory system device 13.

The control device 20 and mobile device 70 may be configured such that a user 15 of the mobile device 70 can set the control device 20 to a local control mode using the mobile device 70 when the user 15 is at a first location 16 local to the control device (e.g., at a first location at or in a substation in which the control device 20 is installed), as illustrated in Figure 14. Setting the control device 20 to the local control mode may involve an authentication process. The authentication process may comprise a multi-stage authentication process, comprising a biometric authentication of the user 15 at the mobile device 70 and an authentication of the user 15 at the control device 20 based on authentication data received by the control device 20 from the mobile device 70.

The control device 20 and mobile device 70 may be configured such that the user 15 of the mobile device 70 can set the control device 20 to the remote control mode using the mobile device 70 when the user 15 is at a second location 17 remote to the control device (e.g., at a supervisory system device 13 outside the substation in which the control device 20 is installed), as illustrated in Figure 15. Setting the control device 20 to the remote control mode may involve an authentication process. The authentication process may comprise a multi-stage authentication process, comprising another biometric authentication of the user 15 at the mobile device 70 and an authentication of the user 15 at the control device 20 based on authentication data received by the control device 20 from the supervisory system device 13. The supervisory system device 13 may be configured to process information output by the mobile device and acquired by the acquisition device 14. The supervisory system device 13 may be configured to ascertain an identity of the user and a unique control device identifier based on the information output by the mobile device and acquired by the acquisition device 14, to generate the request that causes the control device 20 to be set to the remote control mode.

Setting the control device 20 to the remote control mode from the second location 17 may be selectively enabled based on whether a time-based criterion is fulfilled. For illustration, setting the control device 20 to the remote control mode from the second location 17 may be selectively enabled within a time period after the control device has been set to the local control mode. The time period may be fixed or may be configurable, e.g., upon commissioning or configuring of the electric power system.

The control device 20 and mobile device 70 may optionally be configured such that the user 15 of the mobile device 70 can set the control device 20 to the remote control mode using the mobile device 70 when the user 15 is at the first location 16 local to the control device (e.g., at a first location at or in a substation in which the control device 20 is installed), as illustrated in Figure 14. A communication channel (such as a wireless point-to-point communication channel) that was established between the mobile device 70 and the control device 20 to set the control device 20 to the local control mode may be re-established to set the control device 20 to the remote control mode using the mobile device 70 when the user 15 is at the first location 16.

The supervisory system device 13 comprises or is coupled to the acquisition device 14. The acquisition device 14 is configured to capture information output by the mobile device 70, wherein the output information includes a control device identifier and a user identifier. The supervisory system device 13 comprises at least one supervisory system device circuit configured to generate, based on the acquired information, a request that causes the control device 20 identified by the control device identifier to be set to a remote control mode. The supervisory system device 13 may comprise a SCADA or FLM system device.

The acquisition device 14 may comprise an optoelectronic sensor, such as a camera, configured to capture the information from a mobile device display of the mobile device 70. The supervisory system device 13 may be configured to receive, from the control device 20, reference information that depends on the control device identifier and the user identifier. The supervisory system device may be configured to generate the request based on a comparison of the reference information and the acquired information.

The supervisory system device 13 may be configured to determine, based on the acquired information, the control device 20. The supervisory system device 13 may be configured to provide, based on the information, the user identifier to the control device 20.

As has been explained with reference to Figures 1 to 15, the disclosed devices, systems, and methods allow a control mode of a control device for at least one electric power system component to be set. The devices, systems, and methods reduce the need for physical contact of the user 15 with the control device 20. The devices, systems, and methods provide enhanced versatility in setting the control mode of the control device 20.

To ensure compliance with safety requirements when the user 15 is at the location 17 control, the devices, systems, and methods allow the user 15 to get authenticated at the second location 17 to change the control mode of the control device 20 from the second location 17. The devices, systems, and methods are configured to guarantee that the very same user who set the IED to the local control mode is the one who can set the IED to the remote control mode from the second location 17 or, optionally, also from the first location 16. The devices, systems, and methods are configured to provide an authentication scheme which ensures that the person who changes the control mode to the local control mode can set the control mode to the remote control mode.

The user 15 can set the control device 20 to the local control mode by establishing a wireless connection from the mobile device 70 to the control device 20. On the mobile device 70, biometric authentication may be required to grant the user 15 access to data required for setting the control mode of the control device 20. The biometric authentication may comprise a face recognition process, a fingerprint recognition, and/or iris signature recognition, which is a unique identifier for the user.

The connection to the control device 20 may be set to a temporary wireless connection mode, which may be performed as follows. The control device 20 may generate and display a code (such as a barcode) which comprises connection parameters in a coded form including an identifier of the control device 20. The mobile device 70 may read the code. A point-to-point connection may be established between the mobile device 70 and the control device 20. The connection may be established based on if the person identified on the authentication system of the mobile device 70 and the control device 20 authentication match. This means that the user's authentication is already provided on the control device 20. If successful, the mobile device 70 shares again the authentication code with the control device 20. After matching on control device 20, the mobile device 70 can cause the control device 20 to be set to the local control mode.

The authentication code and the control device 20 identifier may be stored back on the mobile device 70. This creates an overview of which control devices were set to the local control mode by the user 15 and are still in the local control mode. The information allows the control device 20 to be set to the remote control mode from the second location 17 in a secure way. To verify that the change in control mode from the second location 17 is authorized by the same user 15, another biometric authentication may be performed by the mobile device 70.

To set the control device 20 to the remote control mode when the user 15 is still at the first location 16, the mobile device 70 is configured to allow the user 15 to select the control device 15 from among one or more control devices operating in local control mode as stored in the mobile device 70. The mobile device 70 may re-establish the point-to-point wireless communication. The control device 20 may be set to the remote control mode, based on successful another authentication of the user

To set the control device 20 to the remote control mode when the user 15 is at the second location 17, access to the control device 20 for setting the control device 20 to the remote control mode may be implemented in a manner which ensures that the user 15 at the second location 17 is the same as the user who previously set the control device 20 to the local control mode. The mobile device 70 may output another code (which may be another graphical code, such as another barcode). The another code may comprise a combination of the control device identifier and the communication parameters from the control device 20 previously captured by the mobile device 70. The another code may be scanned by the FLM or SCADA system and grants access to the control device 20 from the second location 17. The status of the control device 20 can be set back from the local control mode to the remote control mode via the FLM or SCADA system. When successful, a state overview may show the control device 20 operating in the remote control mode. The process for setting the control device 20 to the remote control mode may be time-constrained, to mitigate the risk that the control device 20 is set to the remote control mode inadvertently during longer maintenance work.

While embodiments have been described with reference to the drawings, modifications and alterations may be implemented in other embodiments.

For illustration, while embodiments have been described in which the control device may be a control device for switchgear, the devices, systems, and methods may be used in association with control devices for electric power system components other than switchgear.

While embodiments have been described in which the control device outputs a code in graphical form and the mobile device captures the code using an optoelectronic sensor, the code comprising parameters for a communication channel does not need to be a graphical code. For illustration, the code may comprise a modulated signal. While embodiments have been described in which the mobile device outputs another code in graphical form for authenticating the user from the second location remote to the control device, the another code does not need to be a graphical code. For illustration, the another may comprise a modulated signal. While embodiments have been described in which the control device stores the data required for authenticating the user from the second location remote to the control device, this data may also be stored in the supervisory system.

Embodiments may be used in association with electric power system components of an electric power system which may comprise an electric power grid, such as a medium or high voltage grid. Embodiments may be used in association with electric power generation, transmission, and/or distribution systems, including renewable energy systems (such as DERs).

Various effects and advantages are attained by embodiments of the invention. For illustration, the devices, systems, and methods reduce the need for physical contact of the user 15 with the control device. The devices, systems, and methods provide enhanced versatility in setting the control mode of the control device.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative or exemplary and not restrictive. Various mechanical, compositional, structural, electrical, and operational changes may be made without departing from the scope of the claims. In some instances, well-known circuits, structures and techniques have not been shown in detail in order not to obscure the invention. Thus, it will be understood that changes and modifications may be made by those of ordinary skill within the scope of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A control device (20) for at least one electric power system component (11), the control device (20) comprising:
at least one control circuit (30), configured to be coupled to a communication interface (21) and the at least one electric power system component (11), the at least one control circuit (30) further configured to:
receive data (103) from the communication interface (21);
set the control device (20) to a local control mode based on the received data if a user (15) of a mobile device (70) is at a first location (16) local to the control device (20), wherein the at least one control circuit (30) is configured such that, when the control device (20) is in the local control mode, the at least one control circuit (30) is configured such that it reduces or eliminates the possibility of the at least one electric power system component (11) being operated remotely responsive to a command received via a supervisory system; and
set the control device (20) to a remote control mode in response to a request of the user (15) of the mobile device (70) from a second location (17) remote to the control device (20), wherein the at least one control circuit (30) is configured such that, when the control device (20) is in the remote control mode, the at least one control circuit (30) is configured to operate the at least one electric power system component (11) responsive to a command received from a supervisory system.

2. The control device (20) of claim 1, wherein the communication interface (21) comprises a wireless interface.

3. The control device (20) of claim 1 or claim 2, wherein the at least one control circuit (30) is configured authenticate, based on the received data, the user (15) of the mobile device (70) for setting the control device (20) to the local control mode.

4. The control device (20) of claim of claim 3, wherein the at least one control circuit (30) is configured to perform another authentication of the user (15), based on user information acquired by the control device (20), and to set the control device (20) to the remote control mode based on the another authentication.

5. The control device (20) of any one of the preceding claims, wherein the control device (20) is configured to generate and output a code comprising at least one of:
parameters of a communication channel via which the data (103) are received; and
a unique control device identifier.

6. The control device (20) of claim 5, wherein the code comprises a graphical code,
optionally wherein the graphical code comprises a two-dimensional graphical code and/or optionally wherein the graphical code comprises a barcode.

7. The control device (20) of any one of the preceding claims, wherein the control device (20) is configured to receive the request via a Supervisory Control and Data Acquisition, SCADA, system (13) at the at least one communication interface (21).

8. The control device (20) of any one of the preceding claims, wherein the at least one control circuit (30) is configured to operate the at least one electric power system component (11).

9. The control device (20) of claim 8,
wherein the at least one control circuit (30) is configured to generate an operating signal or command (12) and output the operating signal or command (12) to the at least one electric power system component (11),
optionally wherein the operating signal or command (12) comprises a trip signal or command.

10. A mobile device (70), configured to interact with a control device (20) for at least one electric power system component, the mobile device (70) comprising:
a mobile device communication interface (71); and
at least one mobile device circuit (72) configured to
transmit data (103) to the control device (20) via the mobile device communication interface (71) to cause the control device (20) to be set to a local control mode if a user (15) of the mobile device (70) is at a first location (16) local to the control device (20), wherein the local control mode is a control mode of the control device (20) in which at least one control circuit (30) of the control device (20) is configured such that it reduces or eliminates the possibility of the at least one electric power system component (11) being operated remotely responsive to a command received via a supervisory system; and
enable the control device (20) to be set to a remote control mode by the user (15) of the mobile device (70) from a second location (17) remote to the control device (20), wherein the remote control mode is a control mode of the control device (20) in which the at least one control circuit (30) is configured to operate the at least one electric power system component (11) responsive to a command received from a supervisory system.

11. The mobile device of claim 10, wherein the at least one mobile device circuit (72) is configured to provide user authentication data to the control device (20),
optionally wherein at least one mobile device circuit (72) is configured to provide the user authentication data based on a biometric authentication of the user (15) by the mobile device (70).

12. The mobile device of claim 10 or claim 11, further comprising a sensor (78) configured to capture a code output by the control device (20), the at least one mobile device circuit (72) further configured to transmit the data (103) to the control device (20) based on the code.

13. An electric power system (10), comprising:
the control device (20) of any one of claims 1 to 9; and
the mobile device (70) of any one of claims 10 to 12.

14. A method of controlling operation of a control device (20) for an electric power system component (11), the method comprising:
receiving, by the control device (20), data (103) from a mobile device (70);
setting the control device (20) to a local control mode based on the received data (103) if a user of a mobile device (70) is at a first location (16) local to the control device (20), wherein at least one control circuit (30) of the control device (20) is configured such that, when the control device (20) is in the local control mode, the at least one control circuit (30) is configured such that it reduces or eliminates the possibility of the at least one electric power system component (11) being operated remotely responsive to a command received via a supervisory system; and
setting the control device (20) to a remote control mode in response to an action of the user of the mobile device from a second location (17) remote to the control device (20), wherein the at least one control circuit (30) of the control device (20) is configured such that, when the control device (20) is in the remote control mode, the at least one control circuit (30) is configured to operate the at least one electric power system component (11) responsive to a command received from a supervisory system.

15. The method of claim 14, which is performed by the control device (20) of any one of claims 1 to 9.

## Patentansprüche

1. Steuervorrichtung (20) für mindestens eine Stromversorgungssystemkomponente (11), wobei die Steuervorrichtung (20) aufweist:
mindestens eine Steuerschaltung (30), die für eine Kopplung mit einer Kommunikationsschnittstelle (21) und mit der mindestens einen Stromversorgungssystemkomponente (11) eingerichtet ist, wobei die mindestens eine Steuerschaltung (30) ferner eingerichtet ist:
Daten (103) von der Kommunikationsschnittstelle (21) zu empfangen;
die Steuervorrichtung (20) basierend auf den empfangenen Daten in einen lokalen Steuerungsmodus zu versetzen, falls sich ein Benutzer (15) einer mobilen Vorrichtung (70) an einem ersten Ort (16) lokal zur Steuervorrichtung (20) befindet, wobei die mindestens eine Steuerschaltung (30) derart eingerichtet ist, dass die mindestens eine Steuerschaltung (30), wenn sich die Steuervorrichtung (20) im lokalen Steuerungsmodus befindet, eingerichtet ist, die Möglichkeit einer ferngesteuerten Betätigung der mindestens einen Stromversorgungssystemkomponente (11) als Reaktion auf einen über ein Leitsystem empfangenen Befehl zu reduzieren oder zu eliminieren; und
die Steuervorrichtung (20) als Reaktion auf eine Anforderung des Benutzers (15) der mobilen Vorrichtung (70) von einem zweiten Ort (17), der von der Steuervorrichtung (20) entfernt ist, in einen Fernsteuerungsmodus zu versetzen, wobei die mindestens eine Steuerschaltung (30) derart eingerichtet ist, dass die mindestens eine Steuerschaltung (30), wenn sich die Steuervorrichtung (20) im Fernsteuerungsmodus befindet, eingerichtet ist, die mindestens eine Stromversorgungssystemkomponente (11) als Reaktion auf einen vom Leitsystem empfangenen Befehl zu betätigen.

2. Steuervorrichtung (20) nach Anspruch 1, wobei die Kommunikationsschnittstelle (21) eine Drahtlosschnittstelle aufweist.

3. Steuervorrichtung (20) nach Anspruch 1 oder 2, wobei die mindestens eine Steuerschaltung (30) eingerichtet ist, basierend auf den empfangenen Daten den Benutzer (15) der mobilen Vorrichtung (70) zu authentifizieren, um die Steuervorrichtung (20) in den lokalen Steuerungsmodus zu versetzen.

4. Steuervorrichtung (20) nach Anspruch 3, wobei die mindestens eine Steuerschaltung (30) eingerichtet ist, eine weitere Authentifizierung des Benutzers (15) basierend auf von der Steuervorrichtung (20) erfassten Benutzerinformationen durchzuführen und die Steuervorrichtung (20) basierend auf der weiteren Authentifizierung in den Fernsteuerungsmodus zu versetzen.

5. Steuervorrichtung (20) nach einem der vorhergehenden Ansprüche, wobei die Steuervorrichtung (20) eingerichtet ist, einen Code zu erzeugen und auszugeben, der mindestens eines der Folgenden aufweist:
Parameter eines Kommunikationskanals, über den die Daten (103) empfangen werden; und
eine eindeutige Steuervorrichtungskennung.

6. Steuervorrichtung (20) nach Anspruch 5, wobei der Code einen grafischen Code aufweist,
wobei optional der grafische Code einen zweidimensionalen grafischen Code aufweist und/oder
wobei optional der grafische Code einen Barcode aufweist.

7. Steuervorrichtung (20) nach einem der vorhergehenden Ansprüche, wobei die Steuervorrichtung (20) eingerichtet ist, die Anforderung über ein SCADA-System (13) an der mindestens einen Kommunikationsschnittstelle (21) zu empfangen.

8. Steuervorrichtung (20) nach einem der vorhergehenden Ansprüche, wobei die mindestens eine Steuerschaltung (30) eingerichtet ist, die mindestens eine Stromversorgungssystemkomponente (11) zu betätigen.

9. Steuervorrichtung (20) nach Anspruch 8,
wobei die mindestens eine Steuerschaltung (30) eingerichtet ist, ein Betätigungssignal oder einen Betätigungsbefehl (12) zu erzeugen und das Betätigungssignal oder den Betätigungsbefehl (12) an die mindestens eine Stromversorgungssystemkomponente (11) auszugeben,
wobei optional das Betätigungssignal oder der Betätigungsbefehl (12) ein Auslösesignal oder einen Auslösebefehl aufweist.

10. Mobile Vorrichtung (70), die für eine Interaktion mit einer Steuervorrichtung (20) für mindestens eine Stromversorgungssystemkomponente (11) eingerichtet ist, wobei die mobile Vorrichtung (70) aufweist:
eine Kommunikationsschnittstelle (71) der mobilen Vorrichtung und
mindestens eine Schaltung (72) der mobilen Vorrichtung, wobei die mindestens eine Schaltung (72) eingerichtet ist
Daten (103) an die Steuervorrichtung (20) über die Kommunikationsschnittstelle (71) der mobilen Vorrichtung zu senden, um zu veranlassen, dass die Steuervorrichtung (20) in einen lokalen Steuerungsmodus versetzt wird, falls sich ein Benutzer (15) der mobilen Vorrichtung (70) an einem ersten Ort (16) lokal zur Steuervorrichtung (20) befindet, wobei der lokale Steuerungsmodus ein Steuerungsmodus der Steuervorrichtung (20) ist, in dem die mindestens eine Steuerschaltung (30) eingerichtet ist, die Möglichkeit einer ferngesteuerten Betätigung der mindestens einen Stromversorgungssystemkomponente (11) als Reaktion auf einen über ein Leitsystem empfangenen Befehl zu reduzieren oder zu eliminieren; und
zu ermöglichen, dass die Steuervorrichtung (20) durch den Benutzer (15) der mobilen Vorrichtung (70) von einem zweiten Ort (17), der von der Steuervorrichtung (20) entfernt ist, in einen Fernsteuerungsmodus versetzt wird, wobei der Fernsteuerungsmodus ein Steuerungsmodus der Steuervorrichtung (20) ist, in dem die mindestens eine Steuerschaltung (30) eingerichtet ist, die mindestens eine Stromversorgungssystemkomponente (11) als Reaktion auf einen vom Leitsystem empfangenen Befehl zu betätigen.

11. Mobile Vorrichtung (70) nach Anspruch 10, wobei die mindestens eine Schaltung (72) der mobilen Vorrichtung eingerichtet ist, Authentifizierungsdaten des Benutzers an die Steuervorrichtung (20) bereitzustellen,
wobei optional die mindestens eine Schaltung (72) der mobilen Vorrichtung eingerichtet ist, die Authentifizierungsdaten basierend auf einer biometrischen Authentifizierung des Benutzers (15) durch die mobile Vorrichtung (70) bereitzustellen.

12. Mobile Vorrichtung (70) nach Anspruch 10 oder 11, ferner aufweisend einen Sensor (78), der eingerichtet ist, einen von der Steuervorrichtung (20) ausgegebenen Code zu erfassen, wobei die mindestens eine Schaltung (72) der mobilen Vorrichtung ferner eingerichtet ist, die Daten (103) basierend auf dem Code an die Steuervorrichtung (20) zu senden.

13. Stromversorgungssystem (10), aufweisend:
die Steuervorrichtung (20) nach einem der Ansprüche 1 bis 9; und
die mobile Vorrichtung (70) nach einem der Ansprüche 10 bis 12.

14. Verfahren zum Steuern des Betriebs einer Steuervorrichtung (20) für eine Stromversorgungssystemkomponente (11), wobei das Verfahren aufweist:
Empfangen von Daten (103) durch die Steuervorrichtung (20) von einer mobilen Vorrichtung (70);
Versetzen der Steuervorrichtung (20) in einen lokalen Steuerungsmodus basierend auf den empfangenen Daten (103), falls sich ein Benutzer der mobilen Vorrichtung (70) an einem ersten Ort (16) lokal zur Steuervorrichtung (20) befindet, wobei mindestens eine Steuerschaltung (30) der Steuervorrichtung (20) derart eingerichtet ist, dass die mindestens eine Steuerschaltung (30), wenn sich die Steuervorrichtung (20) im lokalen Steuerungsmodus befindet, eingerichtet ist, die Möglichkeit einer ferngesteuerten Betätigung der mindestens einen Stromversorgungssystemkomponente (11) als Reaktion auf einen über ein Leitsystem empfangenen Befehl zu reduzieren oder zu eliminieren; und
Versetzen der Steuervorrichtung (20) in einen Fernsteuerungsmodus als Reaktion auf eine Aktion des Benutzers der mobilen Vorrichtung von einem zweiten Ort (17), der von der Steuervorrichtung (20) entfernt ist, wobei die mindestens eine Steuerschaltung (30) der Steuervorrichtung (20) so eingerichtet ist, dass die mindestens eine Steuerschaltung (30), wenn sich die Steuervorrichtung (20) im Fernsteuerungsmodus befindet, eingerichtet ist, die mindestens eine Stromversorgungssystemkomponente (11) als Reaktion auf einen vom Leitsystem empfangenen Befehl zu betätigen.

15. Verfahren nach Anspruch 14, das durch die Steuervorrichtung (20) nach einem der Ansprüche 1 bis 9 ausgeführt wird.

## Revendications

1. Dispositif de commande (20) pour au moins un composant de système d'alimentation électrique (11), le dispositif de commande (20) comprenant :
au moins un circuit de commande (30), configuré pour être couplé à une interface de communication (21) et à l'au moins un composant de système d'alimentation électrique (11), l'au moins un circuit de commande (30) étant en outre configuré pour :
recevoir des données (103) en provenance de l'interface de communication (21) ;
mettre le dispositif de commande (20) sur un mode de commande locale sur la base des données reçues si un utilisateur (15) d'un dispositif mobile (70) se trouve à un premier emplacement (16) local par rapport au dispositif de commande (20), dans lequel l'au moins un circuit de commande (30) est configuré de telle sorte que, lorsque le dispositif de commande (20) est dans le mode de commande locale, l'au moins un circuit de commande (30) est configuré de telle sorte qu'il réduit ou élimine la possibilité de mise en fonctionnement à distance de l'au moins un composant de système d'alimentation électrique (11) en réponse à une commande reçue à travers un système de supervision ; et
mettre le dispositif de commande (20) sur un mode de commande à distance en réponse à une demande de l'utilisateur (15) du dispositif mobile (70) à partir d'un deuxième emplacement (17) distant par rapport au dispositif de commande (20), dans lequel l'au moins un circuit de commande (30) est configuré de telle sorte que, lorsque le dispositif de commande (20) est dans le mode de commande à distance, l'au moins un circuit de commande (30) est configuré pour faire fonctionner l'au moins un composant de système d'alimentation électrique (11) en réponse à une commande reçue en provenance d'un système de supervision.

2. Dispositif de commande (20) selon la revendication 1, dans lequel l'interface de communication (21) comprend une interface sans fil.

3. Dispositif de commande (20) selon la revendication 1 ou la revendication 2, dans lequel l'au moins un circuit de commande (30) est configuré pour authentifier l'utilisateur (15) du dispositif mobile (70) sur la base des données reçues pour mettre le dispositif de commande (20) sur le mode de commande locale.

4. Dispositif de commande (20) selon la revendication 3, dans lequel l'au moins un circuit de commande (30) est configuré pour effectuer une autre authentification de l'utilisateur (15), sur la base d'informations d'utilisateur acquises par le dispositif de commande (20), et pour mettre le dispositif de commande (20) sur le mode de commande à distance sur la base de l'autre authentification.

5. Dispositif de commande (20) selon l'une quelconque des revendications précédentes, dans lequel le dispositif de commande (20) est configuré pour générer et délivrer en sortie un code comprenant au moins l'un parmi :
des paramètres d'un canal de communication à travers lequel les données (103) sont reçues ; et
un identifiant unique de dispositif de commande.

6. Dispositif de commande (20) selon la revendication 5, dans lequel le code comprend un code graphique,
optionnellement dans lequel le code graphique comprend un code graphique bidimensionnel et/ou optionnellement dans lequel le code graphique comprend un code à barres.

7. Dispositif de commande (20) selon l'une quelconque des revendications précédentes, dans lequel le dispositif de commande (20) est configuré pour recevoir la demande à travers un système de supervision et d'acquisition de données, SCADA, (13) au niveau de l'au moins une interface de communication (21).

8. Dispositif de commande (20) selon l'une quelconque des revendications précédentes, dans lequel l'au moins un circuit de commande (30) est configuré pour faire fonctionner l'au moins un composant de système d'alimentation électrique (11).

9. Dispositif de commande (20) selon la revendication 8,
dans lequel l'au moins un circuit de commande (30) est configuré pour générer un signal ou une commande de fonctionnement (12) et pour délivrer en sortie le signal ou la commande de fonctionnement (12) vers l'au moins un composant de système d'alimentation électrique (11),
optionnellement dans lequel le signal ou la commande de fonctionnement (12) comprend un signal ou une commande de déclenchement.

10. Dispositif mobile (70), configuré pour interagir avec un dispositif de commande (20) pour au moins un composant de système d'alimentation électrique, le dispositif mobile (70) comprenant :
une interface de communication de dispositif mobile (71) ; et
au moins un circuit de dispositif mobile (72) configuré pour
transmettre des données (103) au dispositif de commande (20) à travers l'interface de communication de dispositif mobile (71) pour amener le dispositif de commande (20) à se mettre sur un mode de commande locale si un utilisateur (15) du dispositif mobile (70) se trouve à un premier emplacement (16) local par rapport au dispositif de commande (20), dans lequel le mode de commande locale est un mode de commande du dispositif de commande (20) dans lequel au moins un circuit de commande (30) du dispositif de commande (20) est configuré de telle sorte qu'il réduit ou élimine la possibilité de mise en fonctionnement à distance de l'au moins un composant de système d'alimentation électrique (11) en réponse à une commande reçue à travers un système de supervision ; et
permettre au dispositif de commande (20) de se mettre sur un mode de commande à distance par l'utilisateur (15) du dispositif mobile (70) à partir d'un deuxième emplacement (17) distant par rapport au dispositif de commande (20), dans lequel le mode de commande à distance est un mode de commande du dispositif de commande (20) dans lequel l'au moins un circuit de commande (30) est configuré pour faire fonctionner l'au moins un composant de système d'alimentation électrique (11) en réponse à une commande reçue en provenance d'un système de supervision.

11. Dispositif mobile selon la revendication 10, dans lequel l'au moins un circuit de dispositif mobile (72) est configuré pour fournir des données d'authentification d'utilisateur au dispositif de commande (20),
optionnellement dans lequel au moins un circuit de dispositif mobile (72) est configuré pour fournir les données d'authentification d'utilisateur sur la base d'une authentification biométrique de l'utilisateur (15) par le dispositif mobile (70).

12. Dispositif mobile selon la revendication 10 ou la revendication 11, comprenant en outre un capteur (78) configuré pour capturer un code délivré en sortie par le dispositif de commande (20), l'au moins un circuit de dispositif mobile (72) étant en outre configuré pour transmettre les données (103) au dispositif de commande (20) sur la base du code.

13. Système d'alimentation électrique (10), comprenant :
le dispositif de commande (20) selon l'une quelconque des revendications 1 à 9 ; et
le dispositif mobile (70) selon l'une quelconque des revendications 10 à 12.

14. Procédé de commande du fonctionnement d'un dispositif de commande (20) pour un composant de système d'alimentation électrique (11), le procédé comprenant :
la réception, par le dispositif de commande (20), de données (103) en provenance d'un dispositif mobile (70) ;
la mise du dispositif de commande (20) sur un mode de commande locale sur la base des données reçues (103) si un utilisateur d'un dispositif mobile (70) se trouve à un premier emplacement (16) local par rapport au dispositif de commande (20), dans lequel au moins un circuit de commande (30) du dispositif de commande (20) est configuré de telle sorte que, lorsque le dispositif de commande (20) est dans le mode de commande locale, l'au moins un circuit de commande (30) est configuré de telle sorte qu'il réduit ou élimine la possibilité de mise en fonctionnement à distance de l'au moins un composant de système d'alimentation électrique (11) en réponse à une commande reçue à travers un système de supervision ; et
la mise du dispositif de commande (20) sur un mode de commande à distance en réponse à une action de l'utilisateur du dispositif mobile à partir d'un deuxième emplacement (17) distant par rapport au dispositif de commande (20), dans lequel l'au moins un circuit de commande (30) du dispositif de commande (20) est configuré de telle sorte que, lorsque le dispositif de commande (20) est dans le mode de commande à distance, l'au moins un circuit de commande (30) est configuré pour faire fonctionner l'au moins un composant de système d'alimentation électrique (11) en réponse à une commande reçue en provenance d'un système de supervision.

15. Procédé selon la revendication 14, qui est effectué par le dispositif de commande (20) selon l'une quelconque des revendications 1 à 9.
